# EUROPEAN PATENT SPECIFICATION

(11) **EP 3 066 055 B1**
(45) Date of publication and mention of the grant of the patent: **22.07.2020**
(21) Application number: 14859855.0
(22) Date of filing: 04.11.2014
(51) Int. Cl.: C02F 1/46, C02F 11/00, B63J 4/00, A23L 5/30, C02F 1/32, C02F 1/36, C02F 1/30, C02F 11/121, C02F 11/14, C02F 11/18, C02F 11/02, C02F 11/10

(54) **METHOD COMPRISING SEPARATION AND HIGH VOLTAGE PULSE TREATMENT BEFORE DIGESTION**
VERFAHREN MIT TRENNUNG UND HOCHSPANNUNGSPULSBEHANDLUNG VOR DER VERDAUUNG
PROCÉDÉ COMPRENANT LA SÉPARATION ET LE TRAITEMENT PAR IMPULSIONS À HAUTE TENSION AVANT DIGESTION

(30) Priority: 06.11.2013 SE 1351311
(43) Date of publication of application: 14.09.2016
(73) Proprietor: ARC Aroma Pure AB, 224 78 Lund (SE)
(72) Inventor: HENRIKSSON, Pär H, S-223 55 Lund (SE)
(74) Representative: AWA Sweden AB
(86) International application number: PCT/SE2014/051300
(87) International publication number: WO 2015/069175

(56) References cited:
- WO-A1-2009/126084
- WO-A2-2008/039147
- CN-A- 101 781 053
- JP-A- 2002 028 685
- JP-A- 2004 016 969
- JP-A- 2006 000 729
- US-A- 5 133 860
- US-A- 6 030 538
- US-A1- 2002 036 175
- US-A1- 2005 211 638
- VINAY KUMAR TYAGI ET AL: "Application of physico-chemical pretreatment methods to enhance the sludge disintegration and subsequent anaerobic digestion: an up to date review", RE/VIEWS IN ENVIRONMENTAL SCIENCE & BIO/TECHNOLOGY, KLUWER ACADEMIC PUBLISHERS, DO, vol. 10, no. 3, 12 August 2011 (2011-08-12), pages 215-242, XP019945716, ISSN: 1572-9826, DOI: 10.1007/S11157-011-9244-9
- SALERNO MICHAEL B ET AL: "Using a Pulsed Electric Field as a Pretreatment for Improved Biosolids Digestion and Methanogenesis", WATER ENVIRONMENT RESEARCH,, vol. 81, no. 8, 1 August 2009 (2009-08-01) , pages 831-839, XP001575130, ISSN: 1061-4303, DOI: 10.2175/106143009X407366

## Description

### The field of the invention

The present invention relates to a method for treatment of at least one phase, solid and/or liquid, of a pumpable liquid flow, wherein high voltage pulse treatment is involved in the method.

### Background

In water purification very large flows are often to be treated. This is the case for both ballast water and sewerage plants. The amount of solid material is small, i.e. the dry matter level is low, typically a few percent or lower. Different methods are used today, thermal, chemical, biological, mechanical, etc. to purify these products. The purpose of the purification is to minimize the risks with respect to the environment, man and animals by killing harmful microorganisms.

Normally the last step in a purification process is sedimentation of the waste water in a pool where the final product is converted to digested sludge which is returned to e.g. a farm or the agriculture industry. In this process one has to ensure that the digested sludge is harmless for environment, man and animals. The amount of harmful microorganisms and/or toxic substances, such as heavy metals, has to be below the guideline values that apply.

In the recent time the society has come to realize that digested sludge is a resource that should be utilized better. In many places this sludge is used for e.g. biogas production. This has several advantages: the amount of residual sludge becomes lower, the amount of harmful microorganisms in the sludge is reduced, and the amount of greenhouse gases leaking out into the atmosphere may be reduced. However, there is one problem, the dry matter level is low and the digestibility is low. This renders a bad gas yield and bad total economy in the production. To increase the dry matter level different systems for dewatering are sometimes used. This type of equipment may separate rough solid particles but not smaller particles.

One purpose of the present invention is to provide a method which improves the possibility to efficiently treat a pumpable liquid flow, such as ballast water or other water flows intended to be purified, before further purification is conducted or before e.g. digestion is made.

### Summary of one aspect of the invention

The present invention refers to a method of treatment of a pumpable liquid flow, wherein the method comprises:
- providing the pumpable flow in the form of an inflowing product;
- then adding one or more flocculating agents to the pumpable liquid flow;
- thereafter performing a filtration in a filter for separation of a solid phase from the pumpable liquid flow, for obtaining one flow with increased content of solid phase and one flow with increased liquid level; and
- thereafter treatment of the flow with increased content of solid phase with high voltage pulses in a pulsed electric field (PEF) unit to increase the digestibility of the flow with increased content of solid phase,
and
after that said flow with increased content of solid phase has been treated with the high voltage pulses in the PEF-unit then directly performing digestion of the flow with increased content of solid phase, and biogas production.

The pumpable liquid flow may e.g. be sewage sludge, ballast water or the like. In the case of e.g. ballast water the separation may imply that the separated flow with increased liquid level is a more or less clear water phase which may be returned directly to the ocean or a lake. It should, however, be mentioned that the flow with increased liquid level also may be post-treated, which is further described below. The flow with increased content of solid phase is a flow with a phase in which a concentration has been made of particles and other solid matter. It may further be said that the filtration which constitutes the separation may be performed in one or several steps, both several steps in series or parallel as several filtration steps which are performed together with other steps, such as the PEF treatment step, as intermediate steps. This is discussed further below.

The treatment of the flow with increased content of solid phase with high voltage pulses in a PEF-unit implies a treatment in an electrical field where the flow is exposed to these high voltage pulses. One example of a device possible to use for the PEF treatment, and a method for using such a device, is disclosed in SE531797.

One advantage of the present invention is directed to the fact that the treatment with short or momentary high voltage pulses may increase the digestibility radically, which is of interest with respect to a subsequent digestion treatment. High voltage pulses break structures and microorganisms and make these available in the digestion process, which in turn is possible to perform in less time and with a higher degree of digestion. As may be seen from above, one application of the present invention is directed to digestion. According to one specific embodiment of the present invention, the method therefore also comprises digestion of the flow with increased content of solid phase after that this flow has been treated with high voltage pulses in a PEF-unit.

A common problem referring to both the digestion direction and other possible applications is the fact that the amount of dry matter is low in the inflow for such use applications, typically a few percent or lower. One advantage of the present invention is the fact that this may be taken care of by the incorporation of a filter which separates solid particles from the flow. In the case of ballast water this may be aquatic animals and plants, and in the case of waste water it may be faeces, food scraps, plant parts, etc.

In the above mention context it should be said that the present invention also may be used in other applications than as a pre-treatment before digestion for biogas production. As examples, the method may be used in a waste water purifying plant. In that case the advantage is that the biological, chemical or mechanical treatment becomes faster and that the settling in the plant will be quicker.

It may be mentioned that in US 6,030,538 there is disclosed a pulsed electric-field system, apparatus and method for disinfecting and dewatering previously-dewatered, biologically active waste-water sludges (e.g., municipal waste-water sewage sludge). The method employed sequentially consists of hydraulically pressurizing the previously dewatered sludge, pre-heating the previously dewatered sludge to a predetermined temperature range, exposing the previously dewatered sludge to a high energy pulsing electrical discharges, pressure separation of the resulting solids and liquid fraction, and final pressure extrusion of the separated solids through nozzles.

The method described in US 6,030,538 does not address the filtration for separation of phases, such as is provided by the present invention. There is disclosed in US 6,030,538 that a conventional waste-water treatment plant typically comprises belt filter presses, centrifuges, plate and frame, or other conventional dewatering technologies, this cannot be interpreted so that the method according to US 6,030,538 in fact also comprises an active separation step. The dewatering step discussed in US 6,030,538 is part of an earlier process, namely being a part of the regular waste water treatment. The method according to the present invention may also be incorporated in a waste water plant, but then in addition to the regular processing therein. In such context US 6,030,538 cannot be interpreted such as to comprise a separation step such as according to the present invention.

Further prior art relevant to the subject-matter of the present invention is JP 2004 016969.

### Short description of the drawings

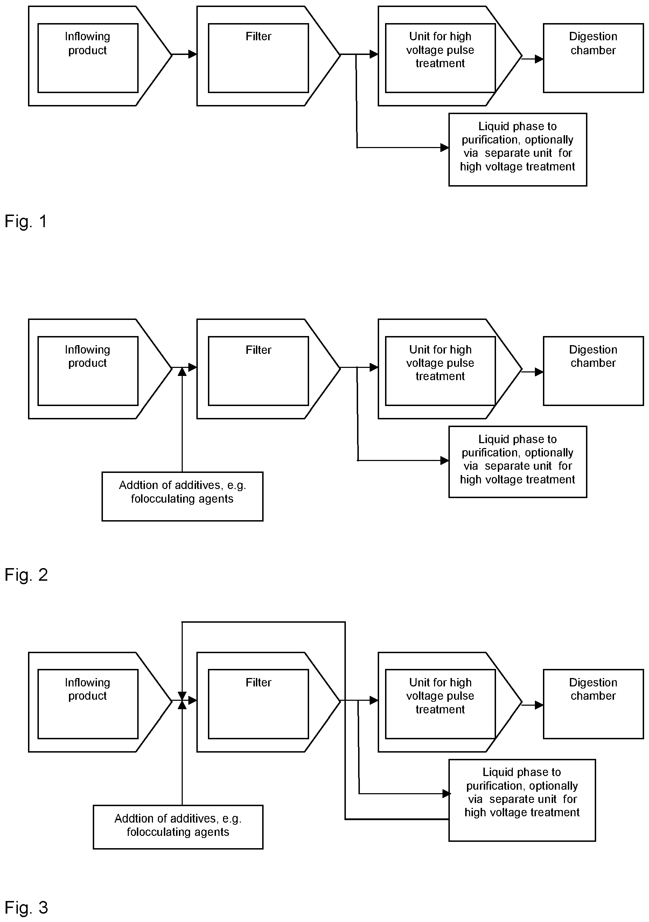

In fig. 1-5 there is shown block diagrams describing the method/system according to different embodiments, figures 2 and 3 relating to the method of the present invention.

Specific embodiments of the present invention

According to one embodiment, the dry matter level in the flow with increased content of solid phase is 5-100 times higher than in the inflowing pumpable liquid flow to the separation. One example of a possible level is typically 10 times higher, but it is totally possible that the concentration is performed to considerably higher levels than that.

As is mentioned above, the method may comprise several filtration steps. According to one specific embodiment, a further filtration is performed after the treatment of the flow with increased content of solid phase with high voltage pulses in a PEF-unit. Such a filtration may e.g. be of interest to once again remove a liquid flow which e.g. may be recirculated to an earlier step in the process or may be sent directly to a purification step. As is disclosed above, at least a part of the flow with increased liquid level may according to one specific embodiment be exposed to further purification, may be recirculated to filtration and/or a combination thereof.

It is not only the filtration that may be performed in several steps. This is also valid for the treatment with high voltage pulses in PEF-units. Also in this case several units may be used, in series or parallel, but may also constitute totally separate steps in the method / process. For example, that part of the flow with increased liquid level which is exposed to further purification may also be treated with high voltage pulses in a separate PEF-unit. This PEF-unit is in that case not the same PEF-unit in which the flow with increased solid phase is treated. It is also possible that one and the same unit, but in that case the flows must be held separated and are not treated together / simultaneously.

The method according to the present invention comprises the use of additive. According to the invention one or more flocculating agent is added before the filtration. The use of flocculating agents brings about the advantage that smaller particles are assembled in flocks which are more easily collected in the filter. Additives may further be added in several different steps in the method or process, but with respect to flocculating agents the addition of these is of interest before the filtration step or before the filtration steps if there are several.

With respect to the digestion application it may be mentioned that there is suggested new legislation stipulating that all digested sludge should be hygienized before the sludge is allowed to be spread e.g. in agriculture. The treatment with short high voltage pulses is also functional towards harmful microorganisms like bacteria, fungus and certain viruses. This may be of relevance in e.g. the case when a digestion chamber is part of the system and where it is the final product, the digested sludge, which is the product that probably is to be certified. Also in the digestion chamber some of the organisms with become inhibited by the treatment. The method according to the present invention may also comprise hygienization as one or several steps. According to one specific embodiment of the present invention, the method also comprises further hygienization in addition to the treatment with high voltage pulses, and where the further hygienization is performed before and/or after the treatment with high voltage pulses. To reach the requirements that probably will be stipulated in the future allowed limits which are in the range of 10⁻⁵ for bacteria (1 of 100 000 are allowed to survive) and 10⁻³ (1 of 1000 are allowed to survive) for viruses it is possible that the method according to the present invention should be complemented with a complementary hygienization technique so that the high voltage pulses not alone have to do all the work.

There are many different techniques possible to use for the further hygienization, and fact is that all that kills harmful microorganisms are possible to use. According to one specific embodiment of the present invention said further hygienization is treatment based on heating, UHT (ultra high heat), UV, ultrasound and/or IR. Heat hygienization and UHT are techniques with a wide use. Both are based on heating, in UHT a high temperature is used during a short time while in regular heat hygienization typically about 72°C is used during an hour or longer.

One solution based on UV may e.g. be based on arrays of light emitting diodes within the UV area being placed on each side of the flow. The reason that arrays are used is to scatter the light out on a large area. By using several arrays (matrices) placed on different sides of the flow, the product may be illuminated simultaneously from several directions. The advantage of this is that totally or partly solid particles do not block the light totally which now comes from several directions. By spreading the light out onto a large area coagulation is avoided on the otherwise hot surface. To further improve the construction this may be complemented with a flushing system that rinses the surfaces from solid particles and deposits. The water phase from the filter part may preferably be used as the flushing water.

Described is further a method or process comprising an IR-chamber as the hygienization unit. According to one specific embodiment, there is provided a method of treatment of at least one phase, solid and/or liquid, of a pumpable liquid flow, wherein the method comprises:
- hygienization of at least a part of the pumpable liquid flow in an IR-chamber; and
- treatment of at least a part of the pumpable liquid flow with high voltage pulses in a PEF-unit;
wherein the hygienization in the IR-chamber may be performed before or after, or both before and after, the treatment with high voltage pulses in a PEF-unit.

According to one specific embodiment, the method according to above also comprises digestion of the flow that has been treated with high voltage pulses in a PEF-unit.

An IR-directed alternative may also be based on arrays (matrices) of light emitting diodes within the IR-range being placed on each side of the flow. The reason that arrays are used is once again to scatter the light out onto a large surface area and then the same advantages as above may also be obtained. To further improve the construction this may be complemented with a flushing system that rinses the surfaces from solid particles and deposits.

As an alternative, a high intensive omnidirectional IR-light source, e.g. a laser light source with diffuser or light scattering unit, may be placed in the centre of a tube. To avoid material from coagulating on the surface, the scattering part is placed inside another tube made of a suitable material which does not absorb the IR-light. The surface of this tube should be held large in relation to the fiber with diffuser scattering the light. By scattering the light onto a large surface, the coagulation is reduced on the otherwise hot surface. If it is an even surface, e.g. polished quartz, this effect may be reduced even further. To further improve the construction this may be complemented with a flushing system that continuously rinses the surfaces from solid particles and deposits. The water phase from the filter part may preferably be used as the flushing water. IR has the advantage that the light is absorbed on solid particles which becomes hot and sterilized. If the correct wavelength is chosen then the absorption in the water phase is very little, which is why only particles, organisms and other that shall be hygienized are heated.

An IR-chamber may constitute a device where an outer casing is a tube for the product transportation, in which tube the product which is to be treated will be positioned or flown through. Inside of this tube, e.g. centred, there is another unit arranged, which unit e.g. constitute an inner tube with an even lateral surface and which inside comprises one or several IR-light sources.

Another possible technology to use as a complement or as an alternative to the IR-chamber(s) is pyrolysis.

Further described is also a system for treatment of at least one phase, solid and/or liquid, of a pumpable liquid flow, wherein the system comprises a first unit comprising at least one filter and a second unit comprising at least one PEF-unit for high voltage pulse treatment. Also in this case several filters may be used, both in series and parallel, in one and the same unit or several units, and also in several units which are not positioned in sequence, such as e.g. a filter before the PEF-unit and one filter after the PEF-unit.

Furthermore, the system may also further comprise a third unit comprising at least one separate PEF-unit for high voltage pulse treatment. As clear from above, the first PEF-unit is directed to treatment of flow with increased solid phase while this separate PEF-unit most often is intended for treatment of a liquid flow which has been filtered off.

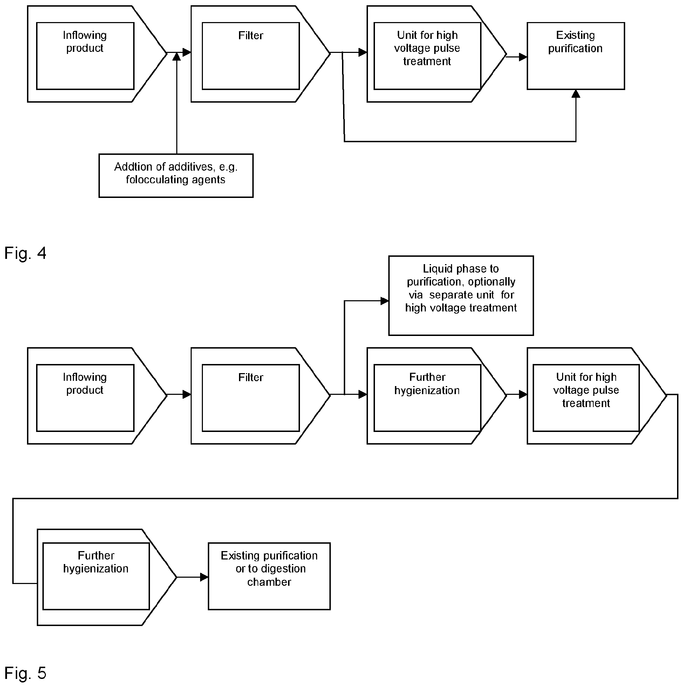

Furthermore, the system may also comprise at least one further hygienization unit. As may be seen in the figures, one or more further hygienization units may be incorporated in the system (see fig. 5). Furthermore, examples of these hygienization units are units directed to treatment based on heating, UHT (ultra high heat), UV, ultrasound and/or IR. The configuration of some of these possible units is revealed above for some examples.

Further described is also a system for treatment of at least one phase, solid and/or liquid, of a pumpable liquid flow, wherein the system comprises at least one hygienization unit comprising an IR-chamber and one unit comprising at least one PEF-unit for high voltage pulse treatment. Also in this case the system may comprise several IR-chambers, both before, after and both before and after the PEF-unit. Furthermore, filtration units may be incorporated, but this is only optional. described embodiment finds particular use for e.g. treatment of foodstuffs. Further described is the use of a system comprising an IR-chamber according to above, for the treatment of at least one phase, solid and/or liquid, of a pumpable liquid foodstuff.

The filter or filters comprised in the described system may have different configurations. According to one specific embodiment, that said at least one filter in the first unit is a tube-like and rotating filter which comprises a net. The filter in this case has a construction which is a rotating, optionally inclining tube, where the lateral surface area is a fine mesh net which lets water through but not the solid part of the product. The tube may be provided with internal grooves like a screw which screws the product upwards during rotation. The product is pumped into the tube, and the liquid phase will penetrate the net during rotation while the solid product will be driven upwards on the inclining plane. The net is suitably provided with spray nozzles which may flush clean water or the purified liquid water phase through the net and as such keep the net clean from contaminants. With this configuration the dry matter level may be increased. Another advantage is that the product is purified or cleaned from harmful microorganisms, and when the water content is lower the energy consumption may be reduced radically if a thermal method is used. These advantages have, in the case of the digestion application, a great advantage with respect to the biogas potential in the material being digested. In the case of ballast water it is most about separating off fish and organisms for treatment as it is not realistic to treat all of the water when the content level of fish and organisms is very small.

In the context of above it should be mentioned that the system may comprise several filters, not only in the first unit. One or more filters may also be comprised after the PEF-unit. These may of course also have a configuration as according to above, i.e. with a rotating tube filter, but it may also be filters of another type, even if the filter in the first unit is a rotating tube filter.

Further described is the use of a system according to above. Further described is a system for the treatment of at least one phase, solid and/or liquid, of a ballast water flow by high voltage pulse treatment of a separated flow with increased content of solid phase in relation to the ballast water flow in a PEF-unit. In this context it may be mentioned that the incoming flow in fact may have a magnitude of 100 billion m³ to be treated in one single "batch". The dry matter level in this flow may be around e.g. 0.1%. By the filter separation, the dry matter level may be increased to e.g. 1% or maybe even higher, such as up to 5% or even 10%, in the solid phase part before this flow undergoes PEF-treatment.

Further described is the use of a system for a digestion application, i.e. for the treatment of at least one phase, solid and/or liquid, of a pumpable liquid flow by high voltage pulse treatment of a separated flow with increased content of solid phase in relation to the pumpable liquid flow in a PEF-unit and for further digestion of the flow with increased content of solid phase after the high voltage pulse treatment.

### Detailed description of the drawings

In fig. 1 there is shown a block diagram of a process or system described herein. The inflowing product, e.g. ballast water, is separated in a filter. The phase with increased level of solid phase undergoes high voltage pulse treatment in a PEF-unit while the liquid phase (water phase) either is so clear so that it, in the case of ballast water, may be returned to the ocean or a lake, or is first sent to further purification treatment, e.g. via a separate PEF-unit. The flow with a high level of solid phase which has undergone PEF-treatment may then either be sent to a stream in a purification plant or be digested in a digestion chamber for biogas production.

The method according to the above has the advantage that very large volumes may be handled. In the digestion application, the amount to be handled in the subsequent biological, chemical and/or mechanical purification may be minimized. Also the amount of digested sludge is minimized as the degree of digestion is increased by the pre-treatment with high voltage pulses. The high voltage pulses cracks the structures and microorganisms which liberates nutrients, and this renders the effect that more gas is produced in the same amount of sludge, which increases the yield, and the gas may be produced faster which increases the capacity. Furthermore, in the case of ballast water, the amount of water to be treated may be reduced drastically. The large problem when treating ballast water is the large volumes to be treated. The purpose of treating ballast water is to limit or eliminate the risks of species spreading between the oceans. To treat several hundred thousand tons of water takes a long time. If the solution according to the present invention is used instead, then the amount to be treated may be reduced only to a couple of percent or less. Only the solid fraction containing the actual plants, animals and organisms are treated.

Furthermore, in fig. 2 there is shown a block diagram of a process or system such as according to fig. 1, but it is also clear that additives may be added before the filtration. It should be understood that further filtration steps may be incorporated in the system. Moreover, several steps with the addition of additives may be present, both for adding flocculating agents and other possible additives.

In fig. 3 there is again shown a process or system such as according to fig. 1 or fig. 2, but in this case there is also shown that the liquid phase after filtration in fact may be recirculated to the inflow to be filtrated again. For the digestion application it may further be said that sludge from the existing plant may be returned to a position before the filter or alternatively before the pre-treatment with high voltage pulses. This renders the effect that also here the digestion degree is increased due to the fact that the high voltage pulses rapture structures and microorganisms which liberates nutrition.

In fig. 4 there is shown a process or system according to another described embodiment. In this case there is provided an application when the treatment is a pre-treatment in or before a purification plant. As may be seen, the different streams may then be flown to further treatment. The liquid stream will of course be treated in one way and the solid phase flow after the PEF-treatment in another way in the subsequent purification plant.

In fig. 5 there is shown a block diagram of a process or system according to yet another embodiment. In this case also units for further hygienization are incorporated in the system. This type of hygienization unit may be incorporated as one single unit or several units, e.g. one unit before and one unit after the PEF-treatment, such as shown in fig. 5.

## Claims

1. Method of treatment of a pumpable liquid flow, wherein the method comprises:
- providing the pumpable liquid flow in the form of an inflowing product;
- then adding one or more flocculating agents to the pumpable liquid flow;
- thereafter performing a filtration in a filter for separation of a solid phase from the pumpable liquid flow, for obtaining one flow with increased content of solid phase and one flow with increased liquid level; and
- thereafter treatment of the flow with increased content of solid phase with high voltage pulses in a pulsed electric field (PEF) unit to increase the digestibility of the flow with increased content of solid phase,
and
after that said flow with increased content of solid phase has been treated with the high voltage pulses in the PEF-unit then directly performing digestion of the flow with increased content of solid phase, and biogas production.

2. Method according to claim 1, wherein the dry matter level in the flow with increased content of solid phase is 5-100 times higher than in the inflowing pumpable liquid flow to the separation.

3. Method according to claim 1 or 2, wherein a further filtration is performed after the treatment of the flow with increased content of solid phase with high voltage pulses in a PEF unit.

4. Method according to any of claims 1-3, wherein at least a part of the flow with increased liquid level is exposed to further purification, is recirculated to filtration and/or a combination thereof.

5. Method according to claim 4, wherein that part of the flow with increased liquid level which is exposed to further purification also is treated with high voltage pulses in a separate PEF unit.

6. Method according to any of claims 1-5, wherein the method also comprises further hygienization in addition to the treatment with high voltage pulses, and wherein the further hygienization is performed before and/or after the treatment with high voltage pulses.

7. Method according to claim 6, wherein said further hygienization is treatment based on heating, UHT (ultra high heat), UV, ultrasound and/or IR.

8. Method according to any of the preceding claims, wherein the filtration is performed in a tube-like and rotating filter which comprises a net.

## Patentansprüche

1. Verfahren zum Behandeln eines pumpfähigen Flüssigkeitsstroms, wobei das Verfahren umfasst:
- Bereitstellen des pumpfähigen Flüssigkeitsstroms in Form eines zulaufenden Produkts;
- dann Zugeben von einem oder mehreren Flockungsmitteln zu dem pumpfähigen Flüssigkeitsstrom;
- danach Vornehmen einer Filterung in einem Filter zum Abtrennen einer festen Phase aus dem pumpfähigen Flüssigkeitsstrom zum Erhalten eines Stroms mit einem höheren Gehalt an fester Phase und eines Stroms mit einem höheren Flüssigkeitsgehalt; und
- danach Behandeln des Stroms mit dem höheren Gehalt an fester Phase mit hohen Spannungsimpulsen in einer PEF-Einheit (pulsed electric field, gepulstes elektrisches Feld) zur Steigerung der Faulfähigkeit des Stroms mit dem höheren Gehalt an fester Phase,
und
nachdem der Strom mit dem höheren Gehalt an fester Phase mit den Hochspannungsimpulsen in der PEF-Einheit behandelt wurde, unmittelbares Vornehmen eines Faulens des Stroms mit dem höheren Gehalt an fester Phase und Biogaserzeugung.

2. Verfahren nach Anspruch 1, wobei der Trockensubstanzgehalt in dem Strom mit dem höheren Gehalt an fester Phase 5- bis 100-mal höher ist als in dem der Trennung zulaufenden pumpfähigen Flüssigkeitsstrom.

3. Verfahren nach Anspruch 1 oder 2, wobei nach der Behandlung des Stroms mit dem höheren Gehalt an fester Phase mit Hochspannungsimpulsen in einer PEF-Einheit eine weitere Filterung durchgeführt wird.

4. Verfahren nach einem der Ansprüche 1 bis 3, wobei zumindest ein Teil des Stroms mit dem höheren Flüssigkeitsgehalt weiter gereinigt wird, zur Filterung zurückgeführt wird und/oder eine Kombination daraus.

5. Verfahren nach Anspruch 4, wobei dieser Teil des Stroms mit dem höheren Flüssigkeitsgehalt, der weiter gereinigt wird, ebenfalls mit Hochspannungsimpulsen in einer separaten PEF-Einheit behandelt wird.

6. Verfahren nach einem der Ansprüche 1 bis 5, wobei das Verfahren auch eine weitere Hygienisierung zusätzlich zur Behandlung mit Hochspannungsimpulsen umfasst und wobei die weitere Hygienisierung vor und/oder nach der Behandlung mit Hochspannungsimpulsen erfolgt.

7. Verfahren nach Anspruch 6, wobei die weitere Hygienisierung eine Behandlung auf Basis von Erhitzung, UHT (Ultrahocherhitzung), UV, Ultraschall und/oder IR ist.

8. Verfahren nach einem der vorhergehenden Ansprüche, wobei die Filterung in einem röhrenartigen und sich drehenden Filter, der ein Netz umfasst, durchgeführt wird.

## Revendications

1. Procédé de traitement d'un flux de liquide pompable, le procédé comprenant :
- l'apport du flux de liquide pompable sous la forme d'un produit entrant ;
- puis l'ajout d'un ou plusieurs agents floculants au flux de liquide pompable ;
- par la suite la mise en œuvre d'une filtration dans un filtre pour la séparation d'une phase solide à partir du flux de liquide pompable, pour l'obtention d'un flux à teneur accrue de phase solide et d'un flux à niveau de liquide accru ; et
- par la suite le traitement du flux à teneur accrue de phase solide avec des impulsions de haute tension dans une unité à champs électriques pulsés (CEP) pour accroître la digestibilité du flux à teneur accrue de phase solide
et
après que ledit flux à teneur accrue de phase solide a été traité avec les impulsions de haute tension dans l'unité à CEP alors directement la mise en œuvre d'une digestion du flux à teneur accrue de phase solide et la production de biogaz.

2. Procédé selon la revendication 1, dans lequel le niveau de matière sèche dans le flux à teneur accrue de phase solide est 5-100 fois plus élevé que dans le flux de liquide pompable entrant allant vers la séparation.

3. Procédé selon la revendication 1 ou 2, dans lequel une filtration supplémentaire est mise en œuvre après le traitement du flux à teneur accrue de phase solide avec des impulsions de haute tension dans une unité à CEP.

4. Procédé selon l'une quelconque des revendications 1-3, dans lequel au moins une partie du flux à niveau de liquide accru est exposée à une purification supplémentaire, est amenée à recirculer vers la filtration et/ou une combinaison de cela.

5. Procédé selon la revendication 4, dans lequel cette partie du flux à niveau de liquide accru qui est exposée à une purification supplémentaire est également traitée avec des impulsions de haute tension dans une unité à CEP séparée.

6. Procédé selon l'une quelconque des revendications 1-5, le procédé comprenant également une hygiénisation supplémentaire en plus du traitement avec des impulsions de haute tension et l'hygiénisation supplémentaire étant mise en œuvre avant et/ou après le traitement avec des impulsions de haute tension.

7. Procédé selon la revendication 6, dans lequel ladite hygiénisation supplémentaire est un traitement basé sur le chauffage, l'UHT (ultra-haute température), des UV, des ultrasons et/ou des IR.

8. Procédé selon l'une quelconque des revendications précédentes, dans lequel la filtration est mise en œuvre dans un filtre tubulaire et rotatif qui comprend un filet.
